# EUROPÄISCHE PATENTSCHRIFT

(11) **EP 3 568 541 B1**
(45) Veröffentlichungstag und Bekanntmachung des Hinweises auf die Patenterteilung: **30.06.2021**
(21) Anmeldenummer: 18714442.3
(22) Anmeldetag: 16.01.2018
(51) Int. Cl.: E04F 15/02, E04F 15/10, B32B 27/38, B32B 27/28, B32B 27/40, E04F 13/08, B32B 15/04, B32B 27/12, B32B 15/08, B32B 15/20

(54) **BODEN-, WAND- UND DECKENVERKLEIDUNG**
FLOOR, WALL AND CEILING CLADDING
REVÊTEMENT DE SOL, DE MUR ET DE PLAFOND

(30) Priorität: 16.01.2017 DE 102017100759
(43) Veröffentlichungstag der Anmeldung: 20.11.2019
(73) Patentinhaber: Lohmann GmbH & Co. KG, 56567 Neuwied (DE); Logis AG, 84431 Heldenstein (DE); Logis Technologies GmbH, 84431 Heldenstein (DE)
(72) Erfinder: FOGEL, Thomas, 56587 Oberraden (DE); FRIEB, Christoph, 97483 Eltmann (DE); HAAG, Martin, 81679 München (DE)
(74) Vertreter: Okoampah, Rene
(86) Internationale Anmeldenummer: PCT/EP2018/051003
(87) Internationale Veröffentlichungsnummer: WO 2018/130720

(56) Entgegenhaltungen:
- EP-A1- 2 829 581
- DE-A1-102007 030 829
- US-A1- 2014 329 062

## Beschreibung

### Technisches Gebiet

Die vorliegende Erfindung betrifft eine Boden-, Wand- und Deckenverkleidung zu Schutz-, Dämm- und Isolierzwecken sowie ein Verfahren zu deren Herstellung.

### Stand der Technik

In der Bauindustrie besteht das Bestreben funktionale Oberflächen bereitzustellen, die eine schnelle und kostengünstige Installation ermöglichen. Im Bereich von Boden-, Wand- und Deckenverkleidungen eignet es sich, mit funktionalisierten Leichtbauelementen zu arbeiten. Diese bilden in der Regel fertig ausgestattete Produkte, die lediglich am Anwendungsort eingebaut werden müssen. Zusätzliche Bearbeitungsschritte wie zum Bespiel eine nachträgliche Sprühbeschichtung am Einbauort können dadurch eingespart werden.

So beschreibt beispielsweise die US 6,481,172 B1 ein strukturelles Wandelement mit einem isolierenden Schaumkern umgeben von Papierschichten, die mit Polyurethan, Polystyrol oder Polyisocyanat imprägniert sind. Ferner ist bekannt in diesem Bereich mit dekorativen Elementen zu arbeiten. Beispielsweise zeigt US 2016/0101601 A1, eine metallisierte flexible polymere Schicht mit einem farbigen Polyurethanklebstoff zur Befestigung. US 2014/0202097 A1 zeigt ein System von mittels einer Art von Kanälen in einem Rahmensystem verbundenen Leichtbauplatten. Eine bessere Isolierung und Akustik sind zwei der zentralen Themen in diesem Zusammenhang, zum Beispiel dargestellt in US 2014/0083040 A1 oder auch in EP 0 965 701 A1.

US 2004/0123555 A1 zeigt vorgefertigte Wände oder Fußböden mit einem Kern aus Pappe, umgeben von einer Schicht eines flammhemmenden Materials. WO 2015/178353 A1 thematisiert eine Beschichtung für Beton bestehend aus einer härtbaren Harzschicht und einer Trägerschicht. Ein Wandelelement für Baufassaden mit einer sandwichartigen Konstruktion mit einer Kernschicht aus einem isolierenden Material umgeben von zwei metallischen Lagen ist in WO 2014/001152 A1 gezeigt. Ein Schaumstoff-Paneel, umfassend einen Träger und mindestens eine auf dem Träger haftende mehrschichtige Verbundplatte, wobei die mehrschichtige Verbundplatte aus einer Kernschicht und einer Dekorschicht besteht und wobei der Träger einen Polyurethan-Schaumstoff umfasst, beschreibt DE 10 2009 036 541 A1.

US 2014/329062 A1 zeigt eine Multizweckfliese.

DE 10 2007 030 829 A1 zeigt eine Flächenverkleidungsstruktur und ein Verfahren zum Herstellen einer Flächenverkleidungsstruktur.

EP 2 829 581 A1 zeigt ein Verfahren zur Beschichtung einer Gebäudeoberfläche, insbesondere einer Wand-, Decken- oder einer Bodenoberfläche eines Gebäudes.

In der Regel sind die vorstehenden Produkte zur Boden-, Wand- und/oder Deckenverkleidungen jeweils auf wenige Anwendungsfälle beschränkt. Ferner erfordert die Installation der vorstehend beschriebenen Produkte immer noch eine Vielzahl zeit- und kostenintensiver Arbeitsschritte.

### Darstellung der Erfindung

Ausgehend von dem bekannten Stand der Technik ist es eine Aufgabe der vorliegenden Erfindung, eine verbesserte Boden-, Wand- und Deckenverkleidung zu Schutz-, Dämm- und Isolierzwecken, sowie ein entsprechendes Herstellungsverfahren bereitzustellen.

Die Aufgabe wird durch eine Boden-, Wand- und Deckenverkleidung mit den Merkmalen des Anspruchs 1 gelöst. Vorteilhafte Weiterbildungen ergeben sich aus den Unteransprüchen. Entsprechend wird eine Boden-, Wand- und Deckenverkleidung zu Schutz-, Dämm- und Isolierzwecken vorgeschlagen. Diese umfasst erfindungsgemäß eine Kombination aus einer Trägerschicht mit einer ersten Oberfläche und einer zweiten Oberfläche, wobei die Trägerschicht eine Leichtbauplatte umfasst, eine auf der ersten Oberfläche angeordnete erste Deckbeschichtung, wobei die erste Deckbeschichtung ein Polyurethan, Polyharnstoff und/oder Epoxidharz umfasst, und eine auf der zweiten Oberfläche angeordnete klebende Befestigung, wobei die Leichtbauplatte einen zwischen zwei Aluminiumschichten eingefassten Polymer umfasst.

Die Kombination aus Trägerschicht, Deckbeschichtung und klebender Befestigung bildet ein Fertigprodukt, das die Arbeitsschritte am Einbauort erheblich reduziert. So entfallen aufwendige Beschichtungsvorgänge wie beispielsweise ein Sprühverfahren am Einsatzort. Insbesondere muss der Einbauort nicht aufwendig zu Zwecken der Beschichtung vorbereitet werden. Die Boden-, Wand- und Deckenverkleidung kann so wie sie ist verklebt werden, ohne dass noch zusätzlich ein Klebesystem aufgetragen werden muss. Insgesamt erleichtert und beschleunigt die vorstehend beschriebene Boden-, Wand- und Deckenverkleidung den Einbau.

Darüber hinaus kann bei vergleichsweise geringem Gewicht eine widerstandsfähige Boden-, Wand- und Deckenverkleidung bereitgestellt werden. Die Komponenten der Boden-, Wand- und Deckenverkleidung können derart aufeinander abgestimmt werden, dass auch bei hoher mechanischer Belastung oder starken Temperaturunterschieden die einzelnen Lagen nicht voneinander getrennt werden. Die Trägerschicht verleiht der Boden-, Wand- und Deckenverkleidungen ausreichend Festigkeit und Steifigkeit bei vergleichsweise geringem Gewicht.

Durch Beschichtung der Trägerschicht mit einem Kunststoff auf der einen und einem Klebstoff auf der anderen Seite kann eine Verbundfestigkeit bereitgestellt werden, welche auch bei starker Deformation der Verkleidung gewährleistet ist.

Der für die Deckbeschichtung verwendete Kunststoff kann durch entsprechende Auswahl beziehungsweise Modifikation an das gewünschte Anwendungsgebiet angepasst werden. Somit ergibt sich ein universelles Anwendungsgebiet für die Boden-, Wand- und Deckenverkleidung.

Zusätzlich ermöglicht der Aufbau der Boden-, Wand- und Deckenverkleidung eine vergleichsweise hohe Schlagresistenz. Darüber hinaus kann die Boden-, Wand- und Deckenverkleidung zur Geräuschdämmung beitragen. Dies wird insbesondere durch die Deckbeschichtung aus Polyurethan, Polyharnstoff und/oder Epoxidharz ermöglicht. Wird beispielsweise eine Trennwand mit der Boden-, Wand- und Deckenverkleidung ausgestattet, kann verhindert werden, dass eine störende Geräuschentwicklung von der einen Seite der Wand auf die andere Weite der Wand gelangt.

Des Weiteren kann die Boden-, Wand- und Deckenverkleidung auch zu wärmeisolierenden Zwecken eingesetzt werden.

In einer bevorzugten Ausgestaltung umfasst die Leuchtbauplatte eine Kombination aus Aluminium und einem Faserverbundwerkstoff. Die Leichtbauplatte ermöglicht die Bereitstellung der für die Anwendungen erforderlichen Festigkeit bei verhältnismäßig geringem Gewicht. Dies hat den Vorteil, dass sich die Boden-, Wand- und Deckenverkleidung leicht verarbeiten beziehungsweise verbauen lässt. Ein geringes Gewicht der Boden-, Wand- und Deckenverkleidung wirkt sich auch positiv auf das Gesamtgewicht des Bodes, der Wand, oder der Decke aus.

Im Fall von Faserverbundwerkstoffen können Verstärkungsfasern in eine Polymermatrix eingebettet werden. Als Verstärkungsfasern können Kohlefasern, Glasfasern, Kunststofffasern, Naturfasern und/oder Metallfasern zum Einsatz kommen.

Der Einsatz von Aluminium kann neben der Bereitstellung hoher Festigkeit bei vergleichsweise geringem Gewicht auch die Funktion einer Infrarot reflektierenden Beschichtung übernehmen.

In einer Weiterbildung ist auf der ersten Deckbeschichtung eine zweite Deckbeschichtung angeordnet. Dadurch ist es möglich, eine weitere funktionale Schicht in die Boden-, Wand- und Deckenverkleidung zu integrieren. Alternativ kann die zweite Deckbeschichtung zwischen der ersten Oberfläche der Trägerplatte und der ersten Deckbeschichtung, zwischen der zweiten Oberfläche und der Klebstoffschicht oder auf der der Trägerplatte abgewandten Seite der Klebstoffschicht angeordnet sein.

Erfindungsgemäß umfasst die Leichtbauplatte ein zwischen zwei Aluminiumschichten eingefassten Polymer. Eine derartige Leichtbauplatte weist gegenüber üblichen Boden-, Wand- und Deckenverkleidungen eine vergleichsweise geringe Dicke bei hoher Festigkeit und Steifigkeit auf. Beispielsweise kann die Dicke einer Leichtbauplatte bestehend aus einem in Aluminium eingefassten Polymer gegenüber einer beschichteten Siebdruckplatte um 75% reduziert werden. Zusätzlich weist eine derartige Boden-, Wand- und Deckenverkleidung vergleichsweise hohe wärmedämmende Eigenschaften auf.

In einer Weiterbildung umfasst die Leichtbauplatte einen zwischen zwei Aluminiumschichten eingefassten Polymerschaum. Durch Ausbildung der Polymerschicht in Form einer Schaumschicht ist es möglich, das Gewicht der Boden-, Wand- und Deckenverkleidung noch weiter zu reduzieren. Eine solche Schicht zeichnet sich neben einem geringen Gewicht durch eine geringe Dicke bei ausreichender Festigkeit aus. Ausreichende Festigkeit bedeutet, dass eine Festigkeit bereitgestellt wird, die für die üblichen Anwendungsfälle von Boden-, Wand- und Deckenverkleidungen ausreichend ist. Ferner eignet sich eine derartige Leichtbauplatte dazu, an die Umgebungsgeometrie angepasst zu werden. So kann die Boden-, Wand- und Deckenverkleidung beispielsweise auch über Eckbereiche durchgehend verbaut werden. Insgesamt stellt eine derartige Leichtbauplatte eine gute Verformbarkeit beim Einbau bereit und kommt mit einem vergleichsweise geringen Gewicht und einer geringen Schichtdicke aus.

Insgesamt kommen einer derartigen Leichtbauplatte die Eigenschaften einer Sandwich-Konstruktion zugute. Somit zeichnet sich die einen Polymerschaum umfassende Leichtbauplatte, welche zwischen zwei Aluminiumschichten eingefasst ist, durch eine vergleichsweise hohe Schubsteifigkeit, eine hohe Tragfähigkeit und allgemeine hohe Steifigkeiten aus. Ferner bewirkt der Polymerschaum vergleichsweise hohe wärmedämmende Eigenschaften.

In einer weiter bevorzugten Ausführungsform ist der Polymerschaum ein Polypropylenschaum oder ein Polyethylenschaum. Aufgrund der geringen Dichte des Polypropylenschaums kann eine vergleichsweise leichte Leichtbauplatte bereitgestellt werden. Zusätzlich weist Polypropylen eine hohe Widerstandsfähigkeit gegen Ermüdung auf. Dies ist gerade dann vorteilhaft, wenn die Boden-, Wand- und Deckenverkleidung eine häufige Krafteinwirkung erfährt, wie zum Beispiel durch Stöße.

In einer weiteren bevorzugten Weiterbildung sind die Festigkeiten der Leichtbauplatte größer als die Festigkeiten der Deckbeschichtung. Dadurch ist es möglich, beispielsweise im Fall von einem unebenen Untergrund, Überbrückungen bereitzustellen. Trotz solcher Unebenheiten können die Eigenschaften der funktionalen Deckschicht ganzflächig genutzt werden.

Dieses Verhältnis der Festigkeiten zwischen der Leichtbauplatte und der Deckbeschichtung ermöglicht eine verbesserte Druckverteilung beim lokalen Einwirken einer Kraft auf die Boden-, Wand- und Deckenverkleidung.

In einer weiter bevorzugten Ausführungsform weist die Deckbeschichtung einen Rutschhemmungswert von mindestens R10 auf. Eine Rutschhemmung von R10 nach DIN 51130 macht den Einsatz von Antirutschbeschichtungen überflüssig.

In einer bevorzugten Ausgestaltung weist die Deckbeschichtung einen Gleitreibwert von mindestens 0,6 µD auf. Dieser Gleitreibbeiwerte ist zertifiziert nach VDI-Richtlinie 2700/Blatt 14.

In einer bevorzugten Ausführungsform weist die Deckbeschichtung eine äußere Oberfläche auf, die glatt, rau oder strukturiert ist. Die Deckbeschichtung kann an den entsprechenden Anwendungsfall angepasst sein. Sind gleitende Eigenschaften der Boden-, Wand- und Deckenverkleidung gefragt, kann die Deckbeschichtung glatt ausgestaltet sein und über entsprechend geringe Gleitreibwerte verfügen. Erfordert der Anwendungsfall hingegen die Bereitstellung einer Rutschhemmung, kann die Deckbeschichtung rau oder strukturiert ausgebildet sein.

In einer Weiterbildung umfasst die erste Deckbeschichtung und/oder eine zweite Deckbeschichtung mit einer wachsartigen Schicht überzogene Nanoteilchen. Dadurch ist es möglich einen Kontaktwinkel von größer 90° bereitzustellen, wodurch die Oberfläche der Deckbeschichtung hydrophobe Eigenschaften aufweist. Ein Beispiel für eine derartige Deckbeschichtung ist zum Beispiel in der WO 2010/106370 A1 gezeigt.

Auf diese Weise wird es Wasser, Öl, Schimmel, Schmutz und dergleichen erschwert, auf der Oberfläche anzuhaften. Die Boden-, Wand- und Deckenverkleidung ist dadurch leichter rein zuhalten und zu reinigen.

In einer Weiterbildung umfasst die erste Deckbeschichtung und/oder eine zweite Deckbeschichtung gebundene Silberionen, Kupferionen und/oder Terbutryn. Die Bereitstellung von Silberionen in der Deckbeschichtung verleiht der Oberfläche der Boden-, Wand- und Deckenverkleidung antibakterielle Eigenschaften. Die Bereitstellung von Kupferionen in der Deckbeschichtung verleiht der Oberfläche der Boden-, Wand- und Deckenverkleidung fungizide Eigenschaften. Die Bereitstellung von Terbutryn in der Deckbeschichtung verleiht der Oberfläche der Boden-, Wand- und Deckenverkleidung algizide Eigenschaften.

In einer weiter bevorzugten Weiterbildung umfasst die erste Deckbeschichtung und/oder eine zweite Deckbeschichtung ein Gewebe aus Aluminium-, Edelstahl-, Kupfer-, oder Karbonfasern. Dadurch ist es möglich, mit Hilfe der Boden-, Wand- und Deckenverkleidung elektromagnetische Strahlung abzuwehren.

In einer weiteren Ausführungsform umfasst die erste Deckbeschichtung und/oder eine zweite Deckbeschichtung Rußpartikel oder elektrisch leitende Fasern. Dadurch weist die Boden-, Wand- und Deckenverkleidung eine erhöhte elektrische Leitfähigkeit auf, welche sich auch in einem antistatischen Verhalten widerspiegelt.

In einer weiter bevorzugten Ausführungsform umfasst die klebende Befestigung ein trägerbasiertes Klebeband, ein Transferklebeband oder einen Flüssigklebstoff.

Ein trägerbasiertes Klebeband, insbesondere ein doppelseitiges trägerbasiertes Haftklebeband hat die Möglichkeit, über das Trägermaterial und dessen Eigenschaften (Schaum, Papier, Folie) zum Beispiel seine elastischen Eigenschaften steuern zu können. Darüber hinaus kann durch die Wahl der Klebstoffarten auf beiden Seiten des Trägermaterials die Verklebung mit unterschiedlichen Oberflächen besser auf die jeweiligen Eigenarten der zu verbindenden Oberflächen abgestimmt werden.

Ähnliche Eigenschaften gelten für ein trägerloses Transferhaftklebeband, hier können zum Beispiel auch zwei unterschiedliche Klebstoffarten direkt aufeinander beschichtet werden und damit unterschiedlichen zu verklebenden Oberflächen Rechnung tragen. In der Regel handelt es sich aber um eine homogene klebende Befestigung aus lediglich einem Material. Was die Elastizität angeht, so ist ein Transferklebeband einem doppelseitigen Klebeband mit einem Schaumträger deutlich unterlegen, dafür ist es in der Regel aber kostengünstiger, da kein Trägermaterial benötigt wird.

Flüssigklebstoffe werden zur strukturellen Verklebung eingesetzt, das heißt sie werden direkt am Anwendungsort auf einen oder beide Fügepartner aufgetragen, die dann miteinander in Verbindung gebracht werden und zum Beispiel unter Druck oder Temperatureinwirkung miteinander verkleben.

Darüber hinaus gibt es mittlerweile auch Klebebänder für strukturelle Verklebungen. Der Begriff strukturell bedeutet hier, dass die Verbindung nach der Verklebung eine einheitliche Struktur aufweist. Ein eventuelles Aufbrechen der Verbindung erfolgt nicht mehr unbedingt an der Verklebungsstelle, sondern irgendwo im System, zum Beispiel in einem der Fügepartner. In der Regel erfolgt bei strukturellen Verklebungen die Verklebung unter Einwirkung von Druck, Temperatur und/oder Feuchtigkeit, wodurch der Klebstoff aushärten kann, sodass die klebende Verbindung hergestellt werden kann.

Solche Verbindungen sind wie auch Flüssigverklebungen deutlich stärker und langlebiger, können höhere Belastungen aushalten, lassen sich aber auch nicht ohne Beschädigungen der Fügepartner wieder trennen. Sie benötigen in der Lagerung und Verarbeitung in der Regel einen höheren Aufwand. Beispielsweise kann eine Lagerung bei niedrigen Temperaturen erforderlich sein, um ein vorzeitiges Aushärten zu verhindern.

In einer weiter bevorzugten Weiterbildung umfasst das trägerbasierte Klebeband einen weichelastischen Träger, bevorzugt einen Schaumträger. Dadurch kann die klebende Befestigung auch als Ausgleichsschicht für unebene Untergründe fungieren. Darüber hinaus erhöht der weichelastische Träger der klebende Befestigung die geräuschdämmende Eigenschaft der Boden-, Wand- und Deckenverkleidung.

In einer weiter bevorzugten Ausgestaltung umfasst die klebende Befestigung Acrylate, Polyurethan, Epoxide, Silikon und/oder Kautschuk.

In einer weiter bevorzugten Ausführungsform ist auf einer äußeren Oberfläche der klebenden Befestigung eine Abreißfolie angeordnet. Die Abreißfolie, auch Release-Liner genannt, ermöglicht zum einen eine einfache Lagerung. Die Boden-, Wand- und Deckenverkleidung kann dadurch gestapelt werden. Zum anderen ist die Boden-, Wand- und Deckenverkleidung aufgrund der Abreißfolie bearbeitungsfertig. Nach dem Abziehen der Abreißfolie kann die Boden-, Wand- und Deckenverkleidung direkt auf den Anwendungsort appliziert werden.

In einer weiteren Ausgestaltung ist in den Lagenaufbau der Deckbeschichtung, der Trägerschicht und/oder der klebenden Befestigung ein zusätzliches Befestigungsmittel zum Befestigen der Boden-, Wand- und Deckenverkleidung auf einem Boden, an einer Wand oder an einer Decke integriert. Dadurch kann ein Teil der auf die Boden-, Wand- und Deckenverkleidung wirkenden Kräfte aufgenommen werden, wodurch die klebende Befestigung entlastet werden kann. Ferner kann sichergestellt werden, dass bei einem Versagen der klebenden Befestigung aufgrund von zum Beispiel Alterungserscheinungen, Witterungseinflüssen oder chemischen Einflüssen die Boden-, Wand- und Deckenverkleidung sicher auf einem Boden, an einer Wand und/oder an einer Decke gehalten wird.

Das Befestigungsmittel kann in Form von Schrauben, Nägeln, Saugpfropfen oder Klettverschluss ausgebildet sein. Des Weiteren kann das Mittel zum Befestigen auch in Form eines Permanentmagneten ausgeführt sein, der in der Trägerschicht integriert ist.

In einer bevorzugten Ausführungsform ist in der Trägerschicht oder der ersten Deckbeschichtung mindestens ein Transponder, bevorzugt ein RFID-Transponder integriert. Dadurch kann eine Interaktion der Boden-, Wand- und Deckenverkleidung mit der Umgebung ermöglicht werden. Je nach Art des verwendeten Transponders können beispielsweise bewegliche Objekte in der Nähe der Boden-, Wand- und Deckenverkleidung identifiziert werden.

In einer weiter bevorzugten Ausgestaltung ist in der Trägerschicht oder der ersten Deckbeschichtung mindestens eine Leitung, bevorzugt eine elektrische Leitung integriert. Dadurch können Verkabelungen für zum Beispiel Strom, Internet oder Telefon in die Boden-, Wand- und Deckenverkleidung integriert werden. Die Leitungen müssen nicht extra am Einbauort erzeugt beziehungsweise verlegt werden. Dies führt zu einem zusätzlichen Zeit und Kostenersparnis.

In einer Weiterbildung weist die Deckbeschichtung eine flammhemmende Zusammensetzung auf. Diese kann beispielsweise 20 bis 80 Gew.-% einer Polycarbonatzusammensetzung, 1 bis 20 Gew.-% eines laseraktivierbaren Additivs und 1 bis 20 Gew.-% einer Phosphazen-Verbindung umfassen. Der Boden-, Wand- und Deckenverkleidung kommt dadurch eine zusätzliche flammhemmende Wirkung zu.

Die oben gestellte Aufgabe wird weiterhin durch ein Wandelement gelöst, welches eine Konfiguration gemäß der Boden-, Wand- und Deckenverkleidung nach einem der vorstehenden Aspekte aufweist.

Die oben gestellte Aufgabe wird weiterhin durch eine selbstklebende Fliese gelöst, welche eine Konfiguration gemäß der Boden-, Wand- und Deckenverkleidung nach einem der vorstehenden Aspekte aufweist.

Die oben gestellte Aufgabe wird weiterhin durch ein Bodenelement gelöst, welches eine Konfiguration gemäß der Boden-, Wand- und Deckenverkleidung nach einem der vorstehenden Aspekte aufweist.

Die oben gestellte Aufgabe wird weiterhin durch ein Deckenelement gelöst, welches eine Konfiguration gemäß der Boden-, Wand- und Deckenverkleidung nach einem der vorstehenden Aspekte aufweist.

Die oben gestellte Aufgabe wird weiterhin durch ein Verfahren zur Herstellung einer Boden-, Wand- und Deckenverkleidung mit den Merkmalen des Anspruchs 16 gelöst. Vorteilhafte Weiterbildungen des Verfahrens ergeben sich aus den Unteransprüchen sowie der vorliegenden Beschreibung und den Figuren.

Entsprechend wird ein Verfahren zur Herstellung einer Boden-, Wand- und Deckenverkleidung vorgeschlagen, welches die folgenden Schritte umfasst: Bereitstellen der Trägerschicht, Aufbringen der klebenden Befestigung auf der zweiten Oberfläche der Trägerschicht, und Beschichten der ersten Oberfläche der Trägerschicht mit der ersten Deckbeschichtung im Sprüh- oder Gießverfahren.

In weiteren Ausgestaltung werden beim Beschichten der Trägerschicht mit der ersten Deckbeschichtung Feststoffkörper wie zum Beispiel Hartkorn mit versprüht oder vergossen.

### Kurze Beschreibung der Figuren

Bevorzugte weitere Ausführungsformen der Erfindung werden durch die nachfolgende Beschreibung der Figuren 3 bis 7 und 9 näher erläutert. Dabei zeigen:
- Figur 1: schematisch eine Schnittansicht des Lagenaufbaus einer nicht erfindungsgemäßen Boden-, Wand- und Deckenverkleidung,
- Figur 2: schematisch eine Schnittansicht der nicht erfindungsgemäßen Boden-, Wand- und Deckenverkleidung aus Figur 1 mit einer Abreißfolie,
- Figur 3: schematisch eine Schnittansicht einer erfindungsgemäßen Boden-, Wand- und Deckenverkleidung, welche eine Leichtbauplatte aus einem in zwei Aluminiumschichten eingefassten Polymerschaum umfasst,
- Figur 4: schematisch eine Schnittansicht der erfindungsgemäßen Boden-, Wand- und Deckenverkleidung aus Figur 3, in einem auf einen unebenen Untergrund aufgebrachten Zustand,
- Figur 5: schematisch eine Schnittansicht der erfindungsgemäßen Boden-, Wand- und Deckenverkleidung mit einem trägerbasierten Klebeband,
- Figur 6: schematisch die Schnittansicht der erfindungsgemäßen Boden-, Wand- und Deckenverkleidung aus Figur 5 auf einem unebenen Untergrund,
- Figur 7: schematisch eine Schnittansicht der erfindungsgemäßen Boden-, Wand- und Deckenverkleidung mit drei Klebeschichten,
- Figur 8: schematisch eine Schnittansicht einer nicht erfindungsgemäßen Boden-, Wand- und Deckenverkleidung mit an die Trägerschicht angepassten Klebeschichten, und
- Figur 9: schematisch eine Schnittansicht der erfindungsgemäßen Boden-, Wand- und Deckenverkleidung mit einer zwei Träger umfassenden Klebeschicht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleich wirkende Elemente in den unterschiedlichen Figuren mit identischen Bezugszeichen versehen und auf eine wiederholte Beschreibung dieser Elemente wird teilweise verzichtet, um Redundanzen zu vermeiden.

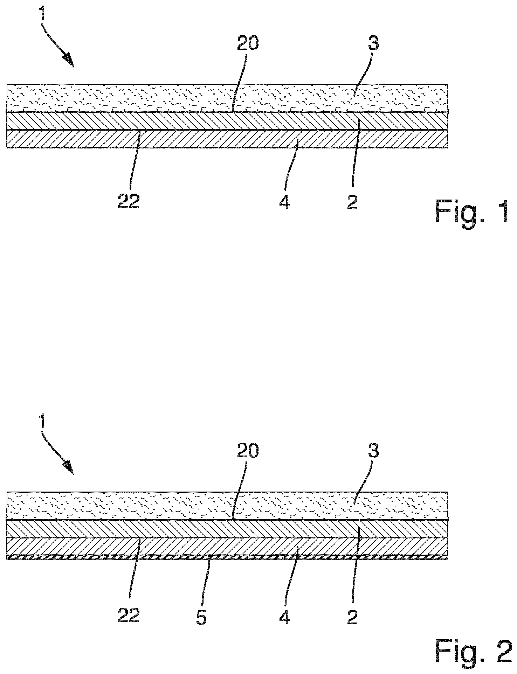

Figur 1 zeigt eine Schnittansicht einer nicht erfindungsgemäßen Boden-, Wand- und Deckenverkleidung 1. Die Boden-, Wand- und Deckenverkleidung 1 besteht aus einem Lagenaufbau, welcher eine Trägerschicht 2 in Form einer Leichtbauplatte aufweist. Im vorliegenden Fall ist die Leichtbauplatte aus Aluminium gefertigt. Alternativ kann die Leichtbauplatte auch aus Kunststoffen gefertigt sein. Beispielsweise können Leichtbauplatten aus Faserverbundwerkstoffen zum Einsatz kommen, so zum Beispiel in eine Polymermatrix eingebettete Verstärkungsfasern. Als Verstärkungsfasern können Kohlefasern, Glasfasern, Kunststofffasern, Naturfasern, oder Metallfasern zum Einsatz kommen.

Die Trägerschicht 2 weist eine erste Oberfläche 20 und eine zweite Oberfläche 22 auf. Die erste Oberfläche 20 ist mit einer ersten Deckbeschichtung 3 beschichtet. Die erste Deckbeschichtung 3 kann aus Epoxidharz, Polyurethan oder Polyharnstoff gefertigt sein, welche ursprünglich in Form eines Harz-Härter-Gemisches auf die erste Oberfläche 20 der Trägerschicht 2 aufgesprüht werden. Für die vorliegende Ausführungsform wird die lösemittelfreie Zweikomponenten-Reaktivspritzbeschichtung VIASEAL LCT1616-60 der Firma VIACOR Polymer GmbH verwendet. Diese weist hervorragende elastische Eigenschaften auf und dient als rutschsichere Beschichtung. Das ausgehärtete Produkt weist eine Zugfestigkeit von mindestens 11 N/mm² (DIN 53504), eine Reißdehnung von mindestens 300% (DIN 53504) und eine Shore-A-Härte von ca. 88 (5 d/23°C) (DIN EN ISO 868) auf. Darüber hinaus können beim Aufsprühen der ersten Deckbeschichtung 3 auf die erste Oberfläche 20 Hartkörner mit aufgesprüht werden, um die Rauigkeit einer äußeren Oberfläche der ersten Deckbeschichtung 3 zu erhöhen. In letzterem kann als erste Deckbeschichtung auch alternativ die lösemittelfreie Zweikomponenten-Reaktivspritzbeschichtung VIASEAL LCT1622-60 Firma VIACOR Polymer GmbH verwendet werden. Diese ist vergleichsweise härter eingestellt und eignet sich gut, um Granulat wie zum Beispiel Hartkörner einzubinden.

Der Verbund aus der Trägerschicht 2 und der ersten Deckbeschichtung 3 hält hohen mechanischen Belastungen und starken Temperaturunterschieden stand. Darüber hinaus hält die Verbindung zwischen der Trägerschicht 2 und der ersten Deckbeschichtung 3 auch starken Deformationen stand.

Auf der zweiten Oberfläche 22 der Trägerschicht 2 ist eine klebende Befestigung 4 in Form eines trägerbasierten Klebebands aufgebracht, wobei der Träger einen weichen Schaum umfasst. Mittels der klebenden Befestigung 4 kann die Boden-, Wand- und Deckenverkleidung auf den jeweiligen Anwendungsort aufgeklebt werden. Alternativ kann die klebende Befestigung auch ein Transferklebeband, das heißt ein trägerloses Band, umfassen. Dadurch können aufgrund der Elastizität der klebenden Befestigung Unebenheiten in der zu beklebenden Oberfläche ausgeglichen werden.

Wände, Decken und Böden können durch Anbringen der Boden-, Wand- und Deckenverkleidung funktionalisiert werden. Darunter fallen zum einen Schutzfunktionen wie zum Beispiel Geräusch- und Wärmedämmung oder Schlagschutz, zum anderen können rutschhemmende oder gleitbegünstigende Eigenschaften nachträglich bereitgestellt werden. Um die Wände, Decken und Böden mit den vorstehend beschriebenen Eigenschaften auszustatten, kann die Boden-, Wand- und Deckenverkleidung 1 als Fertigprodukt in wenigen Arbeitsschritten angebracht werden.

Die Trägerschicht 2 in Forme einer Aluminiumleichtbauplatte verleiht der Boden-, Wand- und Deckenverkleidung ausreichende Festigkeits- und Steifigkeitseigenschaften bei einem gleichzeitig vergleichsweise geringen Gewicht. Mittels der klebenden Befestigung 4 kann die Boden-, Wand- und Deckenverkleidung auf unterschiedlichsten Wänden, Decken oder Böden befestigt werden. Beispielhaft zu nennen sind Betonwände, -decken und -böden, verputzte Wände, Holzwände, - decken und -böden und dergleichen.

Figur 2 zeigt die nicht erfindungsgemäße Boden-, Wand- und Deckenverkleidung aus Figur 1, welche zusätzlich eine Abreißfolie 5 auf der äußeren Oberfläche der klebenden Befestigung 4 aufweist. Die Abreißfolie 5 kann bis kurz vor dem Einbau der Boden-, Wand- und Deckenverkleidung auf der klebenden Befestigung 4 verbleiben.

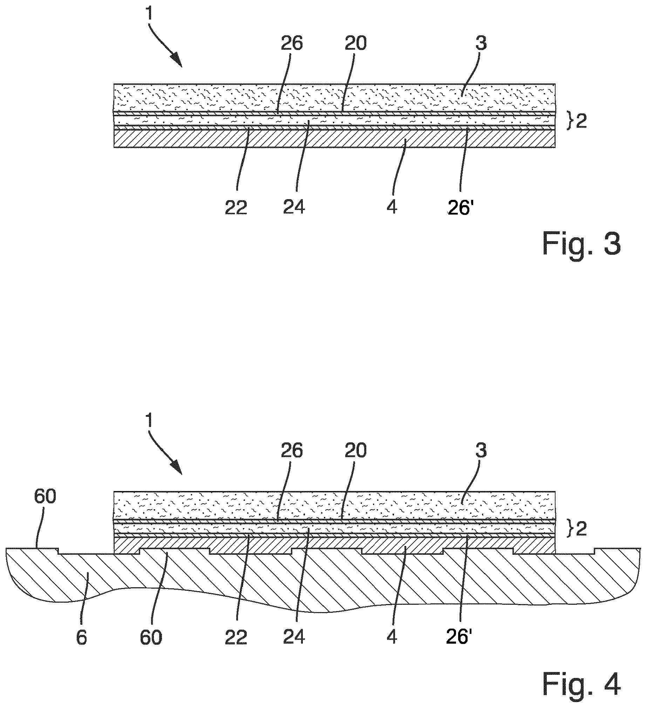

Figur 3 zeigt schematisch eine Schnittansicht eines Lagenaufbaus einer erfindungsgemäßen Boden-, Wand- und Deckenverkleidung 1, welche eine Trägerschicht 2 in Form einer Leichtbauplatte aufweist, die einen zwischen zwei Aluminiumschichten 26, 26' eingefassten Polymerschaum 24 umfasst. Der Polymerschaum 24 ist aus Polypropylen gefertigt, welches sich durch eine äußerst geringe Dichte auszeichnet. Eine Trägerschicht 2, bestehend aus zwei Aluminiumschichten 26, 26' und einer dazwischen eingefassten Polypropylen-Polymerschaum-Schicht, zeichnet sich durch eine hohe Festigkeit bei einem vergleichsweise geringen Gewicht und einer geringen Schichtdicke aus.

Darüber hinaus hat der Polymerschaum 24 den Vorteil, dass er verformt werden kann. So kann die Boden-, Wand- und Deckenverkleidung 1 beispielsweise auch über Eckbereiche, wie zum Bespiel dem Übergang von Boden zu Wand, durchgehend verbaut werden. Des Weiteren birgt der in den Aluminiumschichten 26, 26' eingefasste Polymerschaum 24 gute Schall- und Wärmedämmungseigenschaften. Die in Figur 3 gezeigte klebende Befestigung 4 ist durch ein Transferklebeband gebildet und auf die dem Polymerschaum 24 abgewandte Seite der Aluminiumschicht 26' geklebt.

Figur 4 zeigt die erfindungsgemäße Boden-, Wand- und Deckenverkleidung 1 aus Figur 3, wobei die klebende Befestigung 4 Unebenheiten des Untergrunds 6 der Decke oder des Bodens ausgleicht. Ein solcher unebener Untergrund 6 kann sich beispielsweise aus einer Putzschicht auf einer Wand ergeben. Bei der klebenden Befestigung 4 handelt es sich um ein Transferklebeband. In Figur 4 sind die Unebenheiten durch Vorsprünge 60 abgebildet. Die klebende Befestigung 4 ermöglicht somit eine nahezu konstante Performance der Boden-, Wand- und Deckenverkleidung, unabhängig von der Oberfläche des Untergrunds.

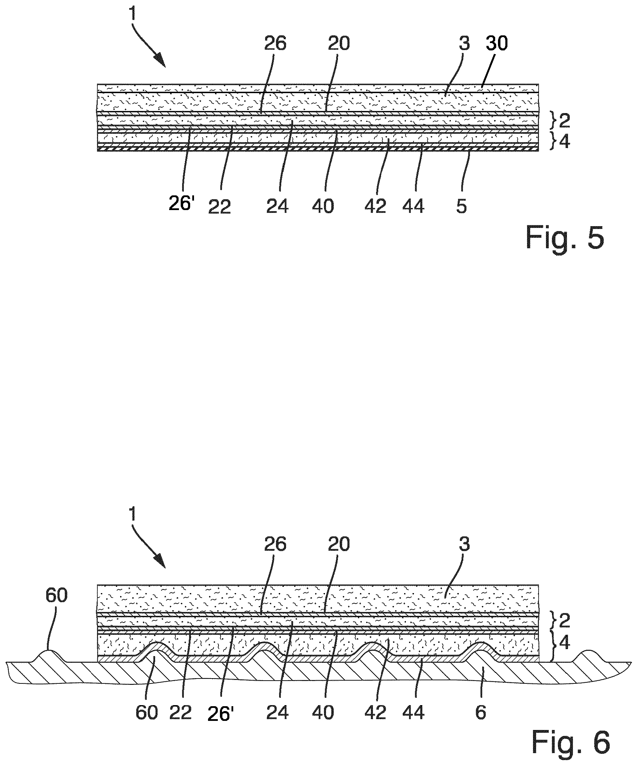

Figur 5 zeigt eine erfindungsgemäße Boden-, Wand- und Deckenverkleidung 1 ähnlich der Boden-, Wand- und Deckenverkleidung aus Figur 3. Im Gegensatz zu dem in Figur 3 gezeigten Transferklebeband weist die in Figur 5 gezeigte Boden-, Wand- und Deckenverkleidung 1 eine klebende Befestigung 4 in Form eines trägerbasierten Klebebands auf. Das trägerbasierte Klebeband bildet ein doppelseitiges Klebeband, welches eine erste Klebeschicht 40, einen Träger 42 und eine zweite Klebeschicht 44 umfasst. Der Träger 42 liegt zwischen der ersten Klebeschicht 40 und der zweiten Klebeschicht 44. Die erste Klebeschicht 40 grenzt an die Aluminiumschicht 26' der Trägerschicht 2 an. Auf der unteren Oberfläche der zweiten Klebeschicht 44 ist eine Abreißfolie 5 angeordnet.

Darüber hinaus weist die in Figur 5 gezeigte Boden-, Wand- und Deckenverkleidung 1 eine zweite Deckbeschichtung 30 auf der ersten Deckbeschichtung 3 auf. Die zweite Deckbeschichtung kann eine zusätzliche Funktion bereitstellen und beispielsweise neben Polyurethan, Polyharnstoff und/oder Epoxidharz weitere funktionale Materialein enthalten. Beispielsweise kann die zweite Schicht Rußpartikel oder elektrisch leitende Fasern aufweisen, um der Oberfläche der Boden-, Wand- und Deckenverkleidung 1 eine erhöhte elektrische Leitfähigkeit zu verleihen.

Figur 6 zeigt die erfindungsgemäße Boden-, Wand- und Deckenverkleidung 1 aus Figur 5, wobei die klebende Befestigung 4 Unebenheiten des Untergrunds 6 einer Wand, einer Decke oder eines Bodens ausgleicht. Die Boden-, Wand- und Deckenverkleidung 1 ist auf den Untergrund 6 aufgeklebt und weißt entsprechend keine Abreißfolie mehr auf.

Die von dem Untergrund 6 hervorragenden Vorsprünge 60 werden von der klebenden Befestigung 4 kompensiert. Die zweite Klebeschicht 44 folgt dem Profil des Untergrunds 6. Die Dicke der zweiten Klebeschicht 44 bleibt dabei nahezu konstant. Der Träger 42 hingegen wird in den Bereichen der Vorsprünge 60 komprimiert. Dadurch ist es möglich, die Boden-, Wand- und Deckenverkleidung 1 auch auf unebenen, zum Beispiel geriffelten Untergründen anzubringen, ohne dass es zu einer Einbuße der Klebeverbindung zwischen der Boden-, Wand- und Deckenverkleidung 1 und dem Untergrund 6 kommt.

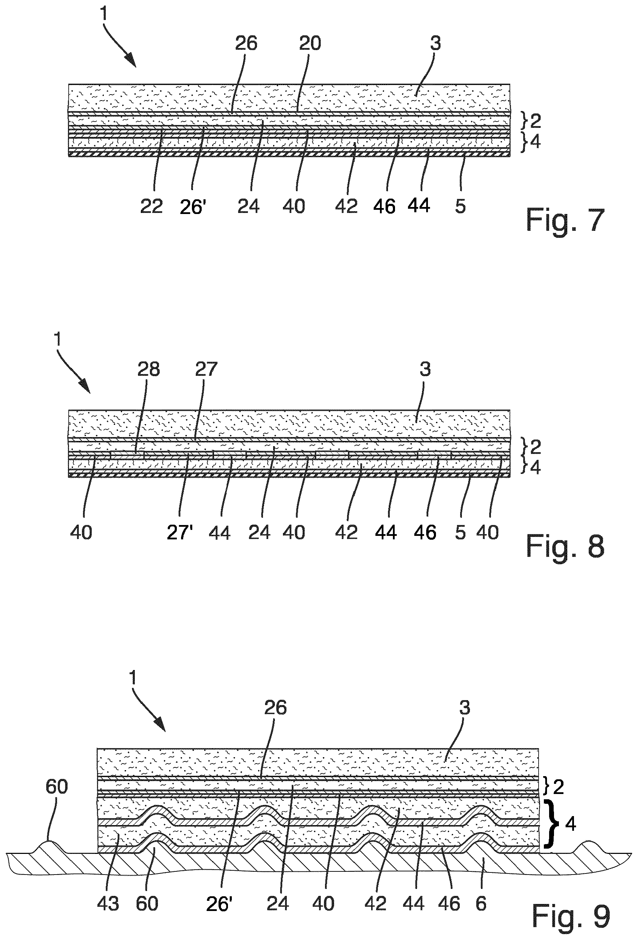

Figur 7 zeigt eine erfindungsgemäße Boden-, Wand- und Deckenverkleidung 1 ähnlich der Boden-, Wand- und Deckenverkleidung aus Figur 5. Die klebende Befestigung 4 weist von der in Figur 5 gezeigten Klebeschicht ab, indem sie eine zusätzliche Klebeschicht zwischen Trägerschicht 2 und Träger 42 umfasst. Insbesondere ist eine erste Klebeschicht 40 an die Anforderungen der Verklebung zur Aluminiumschicht 26 und eine benachbarte dritte Klebeschicht 46 an die Anforderungen der Verklebung zum Träger 42 angepasst. Durch Wahl der entsprechenden ersten und dritten Klebeschicht 40, 46 in Abhängigkeit der Materialien von Trägerschicht 2 und Träger 42 kann eine hochwertige Verklebung, das heißt ein optimaler Zusammenhalt des Verbunds gewährleistet werden. Auf der unteren Oberfläche des Trägers 42 ist eine zweite Klebeschicht 44 aufgetragen. Im nichteingebauten Zustand ist die untere Seite der klebenden Befestigung durch eine Abreißfolie 5 versiegelt.

Figur 8 zeigt eine nicht erfindungsgemäße Boden-, Wand- und Deckenverkleidung 1 gemäß Figur 5 mit dem Unterschied, dass die untere Oberfläche der Trägerschicht 2 unterschiedliche Materialien aufweist. Eine Glasfaserschicht 27' ist im Wechsel neben einer Kohlefaserschicht 28 angeordnet. Darüber hinaus ist die klebende Befestigung 4 an die unterschiedliche Materialpaarung der Trägerschicht 2 angepasst, so dass eine erste Klebeschicht 40 die Glasfaserschicht 27' und eine dritte Klebeschicht 46 die Kohlefaserschicht 28 kontaktiert. Durch Wahl der entsprechenden ersten und dritten Klebeschicht 40, 46 in Abhängigkeit der Materialpaarung der Trägerschicht 2 kann eine hochwertige Verklebung, das heißt ein optimaler Zusammenhalt des Verbunds gewährleistet werden. Auf der unteren Oberfläche des Trägers 42 ist eine zweite Klebeschicht 44 aufgetragen. Im nichteingebauten Zustand ist die untere Seite der klebenden Befestigung 4 durch eine Abreißfolie 5 versiegelt.

Figur 9 zeigt eine erfindungsgemäße Boden-, Wand- und Deckenverkleidung 1 gemäß Figur 6 mit dem Unterschied, dass die klebende Befestigung 4 einen weiteren Träger 43 und eine dritte Klebeschicht 46 umfasst. Die klebende Befestigung 4 weist die folgende Schichtreihenfolge auf: erste Klebeschicht 40, Träger 42, zweite Klebeschicht 44, Träger 43 und dritte Klebeschicht. Die von einem Untergrund 6 hervorragenden Vorsprünge 60 werden von der klebenden Befestigung 4 kompensiert. Die zweite und dritte Klebeschichten 44, 46 folgen dem Profil des Untergrunds 6. Die Dicke der zweiten und dritten Klebeschichten 44, 46 bleibt dabei nahezu konstant. Die Träger 42, 43 hingegen werden in den Bereichen der Vorsprünge 60 komprimiert.

In einer weiteren Ausführungsform wird die Boden-, Wand- und Deckenverkleidung zur Ausbildung eines freistehenden Wandabschnitts auf eine gespiegelte Boden-, Wand- und Deckenverkleidung aufgeklebt. Somit ergibt sich ein Wandelement mit dem folgenden Lagenaufbau: erste Deckbeschichtung, Trägerschicht, klebende Befestigung, klebende Befestigung, Trägerschicht und erste Deckbeschichtung. Ein solches Wandelement weist auf beiden äußeren Oberflächen die Funktionalität der ersten Deckbeschichtungen auf. Das vorstehend beschriebene Wandelement eignet sich als einfach zu installierender Raumteiler. Alternativ kann gänzlich auf die klebende Befestigung verzichtet werden. In diesem Fall wird eine Trägerschicht beidseitig, das heißt auf ihrer ersten und zweiten Oberfläche mit einer ersten Deckbeschichtung versehen.

Soweit anwendbar, können alle einzelnen Merkmale, die in den einzelnen erfindungsgemäßen Ausführungsbeispielen dargestellt sind, miteinander kombiniert und/oder ausgetauscht werden, ohne den Bereich der, wie in den Ansprüchen definiert, Erfindung zu verlassen.

### Bezuqszeichenliste

- 1: Boden-, Wand- und Deckenverkleidung

- 2: Trägerschicht
- 20: Ersten Oberfläche
- 22: Zweiten Oberfläche
- 24: Polymerschaum
- 26, 26': Aluminiumschicht
- 27, 27': Glasfaserschicht
- 28: Kohlefaserschicht

- 3: Erste Deckbeschichtung
- 30: Zweite Deckbeschichtung

- 4: Klebende Befestigung
- 40: Erste Klebeschicht
- 42: Träger
- 43: Träger
- 44: Zweite Klebeschicht
- 46: Dritte Klebeschicht

- 5: Abreißfolie

- 6: Untergrund
- 60: Vorsprung

## Patentansprüche

1. Boden-, Wand- und Deckenverkleidung (1) zu Schutz-, Dämm- und Isolierzwecken, umfassend eine Kombination aus
einer Trägerschicht (2) mit einer ersten Oberfläche (20) und einer zweiten Oberfläche (22), wobei die Trägerschicht (2) eine Leichtbauplatte umfasst,
einer auf der ersten Oberfläche (20) angeordneten ersten Deckbeschichtung (3), wobei die erste Deckbeschichtung (3) ein Polyurethan, Polyharnstoff und/oder Epoxidharz umfasst, und
einer auf der zweiten Oberfläche (22) angeordneten klebenden Befestigung (4)
**dadurch gekennzeichnet, dass**
die Leichtbauplatte einen zwischen zwei Aluminiumschichten (26, 26') eingefassten Polymer umfasst.

2. Boden-, Wand- und Deckenverkleidung (1) nach Anspruch 1, **dadurch gekennzeichnet, dass** die Leichtbauplatte eine Kombination aus Aluminium und einem Faserverbundwerkstoff umfasst.

3. Boden-, Wand- und Deckenverkleidung (1) nach einem der vorhergehenden Ansprüche, **dadurch gekennzeichnet, dass** die Leichtbauplatte einen zwischen zwei Aluminiumschichten (26, 26') eingefassten Polymerschaum (24) umfasst.

4. Boden-, Wand- und Deckenverkleidung (1) nach Anspruch 3, **dadurch gekennzeichnet, dass** der Polymerschaum (24) ein Polypropylenschaum oder eine Polyethylenschaum ist.

5. Boden-, Wand- und Deckenverkleidung (1) nach einem der vorhergehenden Ansprüche, **dadurch gekennzeichnet, dass** die erste Deckbeschichtung (3) einen Rutschhemmungswert von mindestens R10 aufweist.

6. Boden-, Wand- und Deckenverkleidung (1) nach einem der vorhergehenden Ansprüche, **dadurch gekennzeichnet, dass** die erste Deckbeschichtung (3) einen Gleitreibwert von mindestens 0,6 µD aufweist.

7. Boden-, Wand- und Deckenverkleidung (1) nach einem der vorhergehenden Ansprüche, **dadurch gekennzeichnet, dass** die erste Deckbeschichtung (3) und/oder eine zweite Deckbeschichtung (30) mit einer wachsartigen Schicht überzogene Nanoteilchen zum Bereitstellen einer hydrophoben Oberfläche umfasst.

8. Boden-, Wand- und Deckenverkleidung (1) nach einem der vorhergehenden Ansprüche, **dadurch gekennzeichnet, dass** die erste Deckbeschichtung (3) und/oder eine zweite Deckbeschichtung (30) gebundene Silberionen, Kupferionen und/oder Terbutryn umfasst.

9. Boden-, Wand- und Deckenverkleidung (1) nach einem der vorhergehenden Ansprüche, **dadurch gekennzeichnet, dass** die erste Deckbeschichtung (3) und/oder eine zweite Deckbeschichtung (30) ein Gewebe aus Aluminium-, Edelstahl-, Kupfer-, oder Karbonfasern umfasst.

10. Boden-, Wand- und Deckenverkleidung (1) nach einem der vorhergehenden Ansprüche, **dadurch gekennzeichnet, dass** die erste Deckbeschichtung (3) und/oder eine zweite Deckbeschichtung (30) Rußpartikel oder elektrisch leitende Fasern umfasst.

11. Boden-, Wand- und Deckenverkleidung (1) nach einem der vorhergehenden Ansprüche, **dadurch gekennzeichnet, dass** die klebende Befestigung (4) ein trägerbasiertes Klebeband, ein Transferklebeband oder einen Flüssigklebstoff umfasst.

12. Boden-, Wand- und Deckenverkleidung (1) nach einem der vorhergehenden Ansprüche, **dadurch gekennzeichnet, dass** in den Lagenaufbau der ersten Deckbeschichtung (3), der Trägerschicht (2) und/oder der klebenden Befestigung (4) ein zusätzliches Befestigungsmittel zum Befestigen der Boden-, Wand- und Deckenverkleidung (1) auf einem Boden, an einer Wand oder einer Decke integriert ist.

13. Boden-, Wand- und Deckenverkleidung (1) nach einem der vorhergehenden Ansprüche, **dadurch gekennzeichnet, dass** in der Trägerschicht (2) oder der ersten Deckbeschichtung (3) mindestens ein Transponder, bevorzugt ein RFID-Transponder integriert ist.

14. Boden-, Wand- und Deckenverkleidung (1) nach einem der vorhergehenden Ansprüche, **dadurch gekennzeichnet, dass** in der Trägerschicht (2) oder der ersten Deckbeschichtung (3) mindestens eine Leitung, bevorzugt eine elektrische Leitung integriert ist.

15. Selbstklebende Fliese, Wandelement, Bodenelement, oder Deckenelement welches eine Konfiguration gemäß der Boden-, Wand- und Deckenverkleidung (1) nach einem der Ansprüche 1-14 aufweist.

16. Verfahren zur Herstellung einer Boden-, Wand- und Deckenverkleidung (1) gemäß einem der Ansprüche 1-14, die Schritte umfassend:
Bereitstellen der Trägerschicht (2),
Aufbringen der klebenden Befestigung (4) auf der zweiten Oberfläche (22) der Trägerschicht (2), und
Beschichten der ersten Oberfläche (20) der Trägerschicht (2) mit der ersten Deckbeschichtung (3) im Sprüh- oder Gießverfahren.

17. Verfahren zur Herstellung einer Boden-, Wand- und Deckenverkleidung (1) nach Anspruch 16, **dadurch gekennzeichnet, dass** beim Beschichten der Trägerschicht (2) mit der ersten Deckbeschichtung (3) Feststoffkörper wie zum Beispiel Hartkorn mit versprüht oder vergossen werden.

18. Verfahren zur Herstellung einer Boden-, Wand- und Deckenverkleidung (1) nach Anspruch 16 oder 17, **dadurch gekennzeichnet, dass** in einem abschließenden Sprühauftragschritt die Sprühbeschichtung aus einem Abstand erfolgt, der derart bemessen ist, dass ein aufgesprühter Kunststoff zu reagieren beginnt, bevor er die erste Deckbeschichtung (3) oder eine zweite Deckbeschichtung (30) erreicht, wodurch eine unebene Oberfläche auf der ersten Deckbeschichtung (3) oder der zweiten Deckbeschichtung (30) erzeugt wird.

## Claims

1. Floor, wall and ceiling cladding (1) for protection, damping and insulation purposes, comprising a combination of
a carrier layer (2) having a first surface (20) and a second surface (22), the carrier layer (2) comprising a lightweight building board,
a first cover coating (3) arranged on the first surface (20), the first cover coating (3) comprising a polyurethane, polyurea and/or epoxy resin, and
an adhesive fastening (4) arranged on the second surface (22),
**characterised in that**
the lightweight building board comprises a polymer sandwiched between two aluminium layers (26, 26').

2. Floor, wall and ceiling cladding (1) according to claim 1, **characterised in that** the lightweight building board comprises a combination of aluminium and a fibre composite material.

3. Floor, wall and ceiling cladding (1) according to any of the preceding claims, **characterised in that** the lightweight building board comprises a polymer foam (24) sandwiched between two aluminium layers (26, 26').

4. Floor, wall and ceiling cladding (1) according to claim 3, **characterised in that** the polymer foam (24) is a polypropylene foam or a polyethylene foam.

5. Floor, wall and ceiling cladding (1) according to any of the preceding claims, **characterised in that** the first cover coating (3) has a slip resistance value of at least RIO.

6. Floor, wall and ceiling cladding (1) according to any of the preceding claims, **characterised in that** the first cover coating (3) has a sliding friction coefficient of at least 0.6 µD.

7. Floor, wall and ceiling cladding (1) according to any of the preceding claims, **characterised in that** the first cover coating (3) and/or a second cover coating (30) comprises nanoparticles coated with a waxy layer to provide a hydrophobic surface.

8. Floor, wall and ceiling cladding (1) according to any of the preceding claims, **characterised in that** the first cover coating (3) and/or a second cover coating (30) comprises bonded silver ions, copper ions and/or terbutryn.

9. Floor, wall and ceiling cladding (1) according to any of the preceding claims, **characterised in that** the first cover coating (3) and/or a second cover coating (30) comprises a fabric of aluminium fibres, stainless steel fibres, copper fibres or carbon fibres.

10. Floor, wall and ceiling cladding (1) according to any of the preceding claims, **characterised in that** the first cover coating (3) and/or a second cover coating (30) comprises soot particles or electrically conductive fibres.

11. Floor, wall and ceiling cladding (1) according to any of the preceding claims, **characterised in that** the adhesive fastening (4) comprises a carrier-based adhesive tape, a transfer adhesive tape or a liquid adhesive.

12. Floor, wall and ceiling cladding (1) according to any of the preceding claims, **characterised in that** in the layer structure of the first cover coating (3), the carrier layer (2) and/or the adhesive fastening (4) an additional fastening means for fastening the floor, wall and ceiling cladding (1) to a floor, wall or ceiling is integrated.

13. Floor, wall and ceiling cladding (1) according to any of the preceding claims, **characterised in that** in the carrier layer (2) or the first cover coating (3) at least one transponder, preferably an RFID transponder, is integrated.

14. Floor, wall and ceiling cladding (1) according to any of the preceding claims, **characterised in that** in the carrier layer (2) or the first cover coating (3) at least one line, preferably an electrical line, is integrated.

15. Self-adhesive tile, wall element, floor element or ceiling element having a configuration in accordance with the floor, wall and ceiling cladding (1) according to any of claims 1-14.

16. Method for producing a floor, wall and ceiling cladding (1) according to any of claims 1-14, comprising the steps of:
providing the carrier layer (2),
applying the adhesive fastening (4) to the second surface (22) of the carrier layer (2), and
coating the first surface (20) of the carrier layer (2) with the first cover coating (3) by spraying or casting.

17. Method for producing a floor, wall and ceiling cladding (1) according to claim 16, **characterised in that**, when the carrier layer (2) is coated with the first cover coating (3), solid bodies such as hard grains are also sprayed or cast.

18. Method for producing a floor, wall and ceiling cladding (1) according to claim 16 or 17, **characterised in that**, in a final spray application step, the spray coating is applied from a distance measured such that a sprayed-on plastic begins to react before it reaches the first cover coating (3) or a second cover coating (30), thereby producing an uneven surface on the first cover coating (3) or the second cover coating (30).

## Revendications

1. Habillage pour sol, mur et plafond (1) à des fins de protection, d'isolation phonique et d'isolation thermique, comprenant une combinaison constituée de
une couche de support (2) avec une première surface (20) et une seconde surface (22), dans lequel la couche de support (2) comprend un panneau léger,
une première couche de finition (3) agencée sur la première surface (20), dans lequel la première couche de finition (3) comprend un polyuréthane, une polycarbamide et/ou une résine époxyde, et
une fixation adhésive (4) agencée sur la seconde surface (22)
**caractérisé en ce que**
le panneau léger comprend un polymère enfermé entre deux couches d'aluminium (26, 26').

2. Habillage pour sol, mur et plafond (1) selon la revendication 1, **caractérisé en ce que** le panneau léger comprend une combinaison d'aluminium et d'un matériau composite à base de fibres.

3. Habillage pour sol, mur et plafond (1) selon l'une quelconque des revendications précédentes, **caractérisé en ce que** le panneau léger comprend une mousse polymère (24) enfermée entre deux couches d'aluminium (26, 26').

4. Habillage pour sol, mur et plafond (1) selon la revendication 3, **caractérisé en ce que** la mousse polymère (24) est une mousse de polypropylène ou une mousse de polyéthylène.

5. Habillage pour sol, mur et plafond (1) selon l'une quelconque des revendications précédentes, **caractérisé en ce que** la première couche de finition (3) présente une valeur de résistance au glissement d'au moins R10.

6. Habillage pour sol, mur et plafond (1) selon l'une quelconque des revendications précédentes, **caractérisé en ce que** la première couche de finition (3) présente un coefficient de frottement dynamique d'au moins 0,6 µD.

7. Habillage pour sol, mur et plafond (1) selon l'une quelconque des revendications précédentes, **caractérisé en ce que** la première couche de finition (3) et/ou une seconde couche de finition (30) comprend/comprennent des nanoparticules revêtues d'une couche cireuse afin de fournir une surface hydrophobe.

8. Habillage pour sol, mur et plafond (1) selon l'une quelconque des revendications précédentes, **caractérisé en ce que** la première couche de finition (3) et/ou une seconde couche de finition (30) comprend/comprennent des ions argent, des ions cuivre et/ou du terbutryne, liés.

9. Habillage pour sol, mur et plafond (1) selon l'une quelconque des revendications précédentes, **caractérisé en ce que** la première couche de finition (3) et/ou une seconde couche de finition (30) comprend/comprennent un tissu en fibres d'aluminium, d'acier inoxydable, de cuivre ou de carbone.

10. Habillage pour sol, mur et plafond (1) selon l'une quelconque des revendications précédentes, **caractérisé en ce que** la couche de finition (3) et/ou une seconde couche de finition (30) comprend/comprennent des particules de suie ou des fibres électriquement conductrices.

11. Habillage pour sol, mur et plafond (1) selon l'une quelconque des revendications précédentes, **caractérisé en ce que** la fixation adhésive (4) comprend un ruban adhésif sur support, un ruban de transfert adhésif ou un adhésif liquide.

12. Habillage pour sol, mur et plafond (1) selon l'une quelconque des revendications précédentes, **caractérisé en ce qu'**un moyen de fixation supplémentaire destiné à la fixation de l'habillage pour sol, mur et plafond (1) sur un sol, au niveau d'un mur ou au niveau d'un plafond est intégré dans la stratification de la première couche de finition (3), de la couche de support (2) et/ou de la fixation adhésive (4).

13. Habillage pour sol, mur et plafond (1) selon l'une quelconque des revendications précédentes, **caractérisé en ce qu'**au moins un transpondeur, de manière préférée un transpondeur RFID, est intégré dans la couche de support (2) ou dans la première couche de finition (3).

14. Habillage pour sol, mur et plafond (1) selon l'une quelconque des revendications précédentes, **caractérisé en ce qu'**au moins une ligne, de manière préférée une ligne électrique, est intégrée dans la couche de support (2) ou dans la première couche de finition (3).

15. Carreau, élément mural, élément de sol ou élément de plafond auto-adhésif présentant une configuration conforme à l'habillage pour sol, mur et plafond (1) selon l'une quelconque des revendications 1 à 14.

16. Procédé de fabrication d'un habillage pour sol, mur et plafond (1) selon l'une quelconque des revendications 1 à 14, comprenant les étapes consistant à :
fournir la couche de support (2),
appliquer la fixation adhésive (4) sur la seconde surface (22) de la couche de support (2), et
enduire la première surface (20) de la couche de support (2) avec la première couche de finition (3) par pulvérisation ou versage.

17. Procédé de fabrication d'un habillage pour sol, mur et plafond (1) selon la revendication 16, **caractérisé en ce que** des corps solides tels que de la grenaille dure sont projetés ou versés lors de l'enduction de la couche de support (2) avec la première couche de finition (3).

18. Procédé de fabrication d'un habillage pour sol, mur et plafond (1) selon la revendication 16 ou 17, **caractérisé en ce que**, dans une étape finale d'application par pulvérisation, l'enduction par pulvérisation a lieu à une distance mesurée de telle manière qu'une matière plastique pulvérisée commence à réagir avant d'atteindre la première couche de finition (3) ou une seconde couche de finition (30), ce qui a pour effet de produire une surface inégale sur la première couche de finition (3) ou la seconde couche de finition (30).
